# EUROPEAN PATENT SPECIFICATION

(11) **EP 3 339 217 B1**
(45) Date of publication and mention of the grant of the patent: **22.04.2020**
(21) Application number: 17208401.4
(22) Date of filing: 19.12.2017
(51) Int. Cl.: B65G 17/22, B65G 17/42, B65G 47/84, B65B 59/00, B65B 59/04, B65G 17/38, B65G 21/20

(54) **CONVEYING APPARATUS FOR A PACKAGING MACHINE OF ALIMENTARY PASTA, GRANULAR PRODUCTS AND THE LIKE**
FÖRDERVORRICHTUNG FÜR EINE VERPACKUNGSMASCHINE FÜR TEIGWAREN, GRANULÖSE PRODUKTE
 UND DERGLEICHEN
DISPOSITIF DE CONVOYAGE POUR UNE MACHINE D'EMBALLAGE DE PÂTES ALIMENTAIRES, PRODUITS GRANULÉS ET SIMILAIRES

(30) Priority: 22.12.2016 IT 201600129786
(43) Date of publication of application: 27.06.2018
(73) Proprietor: Altopack S.P.A., 55011 Altopascio (LU) (IT)
(72) Inventor: VEZZANI, Giuseppe, 6902 PARADISO LUGANO (CH)
(74) Representative: Mittler, Andrea

(56) References cited:
- EP-A2- 2 043 824
- US-A- 3 675 759
- US-A- 4 716 714
- US-A1- 2002 069 623

## Description

"Conveying apparatus for a packaging machine of alimentary pasta, granular products and the like".

The present invention relates to a conveying apparatus for a packaging machine of alimentary pasta, granular products and the like.

Packaging machines used in particular in the food-processing field, which enclose various small-size products, such as short pasta for example, in a package, are known.

Such packaging machines comprise conveying means able to convey the packages through a plurality of manufacturing assemblies arranged in cascade. Typically, the conveying means support a succession of compartments, each able to accommodate at least one package, and each compartment comprises two walls, one upstream and one downstream, and a base, which is the plane of the conveying means themselves, said walls being orthogonal with respect to the base.

The drawbacks of the use of such conveying means are, on one hand, that of not being able to ensure a stable positioning of the package inside the respective compartment, and, on the other hand, the impossibility of manufacturing packages of mutually different type.

US-4642975 describes a machine for loading cardboard boxes comprising a handling apparatus which is provided with a closed loop chain onto which retaining elements are fixed.

US-3675759 discloses a conveying apparatus according to the preamble of claim 1. In particular, the document describes a retaining element with a "C"-shaped housing fixed on the back of a runner which can be hooked to a wall.

WO-2008/009828 shows a hooking device with a locking pin.

It is the object of the present invention to make a conveying apparatus which guarantees the stable positioning of each package and which makes it possible to manufacture packages of different type.

According to the invention, such object is achieved by a conveying apparatus as defined in claim 1.

Advantageously, the retaining element is simple to hook and release to and from the runner.

Consequently, the work for replacing a plurality of retaining elements for changing the format is fast, whereby limiting machine downtime.

A practical embodiment of the present invention is shown by way of non-limiting example in the accompanying drawings, in which:
figure 1 is a perspective view of a conveying apparatus, according to the present invention, for an alimentary pasta packaging machine;
figure 2 shows a perspective view of the part of the conveying apparatus of Fig. 1;
figure 3 shows a top view of the conveying apparatus of Fig. 1;
figure 4 shows a side view of the conveying apparatus of Fig. 1;
figure 5 shows a section view of the conveying apparatus taken along line V-V of Fig. 4;
figure 6 shows a perspective view of a containing block comprised in the conveying apparatus of Fig. 1;
figure 7 shows a side view of the containing block of Fig. 6;
figure 8 shows a perspective view of a runner with attachment plate and locking lever comprised in the conveying apparatus of Fig. 1;
figures 9 and 10 show a rear view of a runner with attachment plate and locking lever comprised in the conveying apparatus of Fig. 1 in two different steps of manufacturing;
figure 11 shows a perspective view of an adjustment guide comprised in the conveying apparatus of Fig. 1;

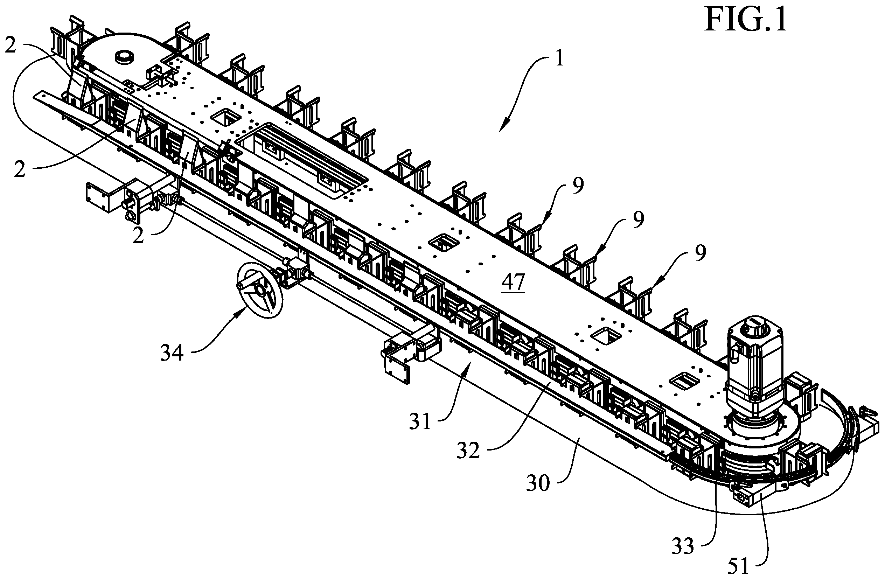

Fig. 1 shows a conveying apparatus 1, according to the present invention, of a paced succession of packages 2 containing small-size foods, e.g. short pasta.

The conveying apparatus 1 is comprised in a packaging machine (not shown in the figures), used in particular in the food-processing field to enclose the alimentary pasta in each package 2, and are able to convey said packages 2 horizontally along a plurality of successive manufacturing assemblies of the packages 2 arranged in cascade along the packaging machine.

For example, a typical packaging machine comprises in cascade a packaging forming and filling assembly, a package head forming assembly, a head welding and cutting assembly for forming an upper flap, a folding assembly of an upper flap, a flap folding share for turning the upper flap by 90° and a labeling assembly for fixing the upper flap to the package.

The package 2 may be a bag of variable size made of plastic material or a cardboard box or even a cardboard box with a bag made of plastic material inside.

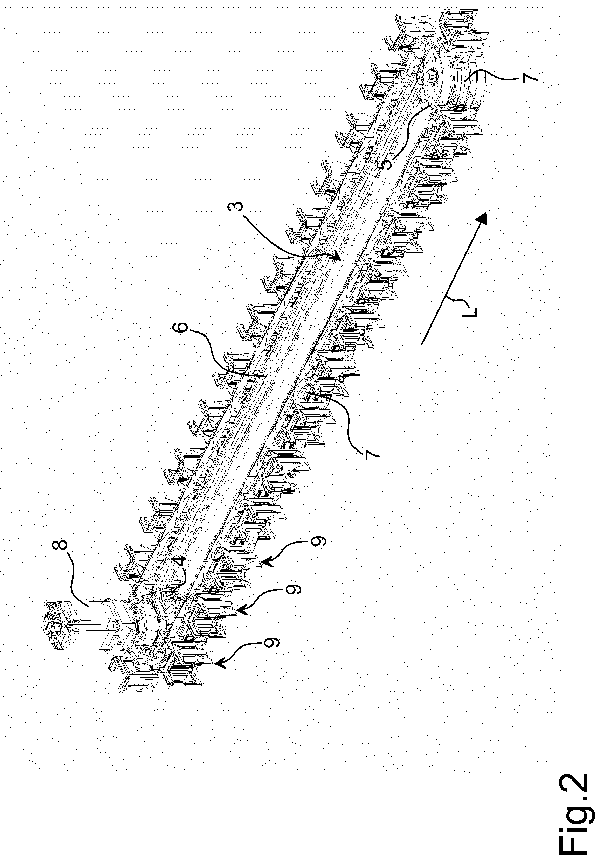

The conveying apparatus 1 (Fig. 2) comprises at least one closed loop chain 3 chain meshing between a drive ring gear 4 and an idle ring gear 5, whereby defining a closed path which comprises two rectilinear positions 6 and two curved portions 7, which are mutually opposite. At least one of the two rectilinear positions 6, 7, in particular defines a moving direction L of the packages 2. The rotation axes of both ring gears 4, 5 are mutually parallel and further vertical and perpendicular with respect to the moving direction L of the packages 2. The drive ring gear 4 is moved by a brushless motor 8.

For example, said at least one closed loop chain 3 comprises a succession of pins connected to each other by means of tablets with a given possibility of relative movement, forming a plurality of links which given step and inner width of the link (Galle chain), and said drive ring gear 4 and said idle ring gear 5 having shape and size such to mesh with said at least one closed loop chain 3. The conveying apparatus 1 may envisage adjustment means of the distance between driving ring gear 4 and idle ring gear 5, so as to tension the chain appropriately.

Advantageously, in a preferred embodiment, the conveying apparatus 1 comprises a closed loop double chain 3 and consequently respective driving ring gears 4 and double idle ring gears 5.

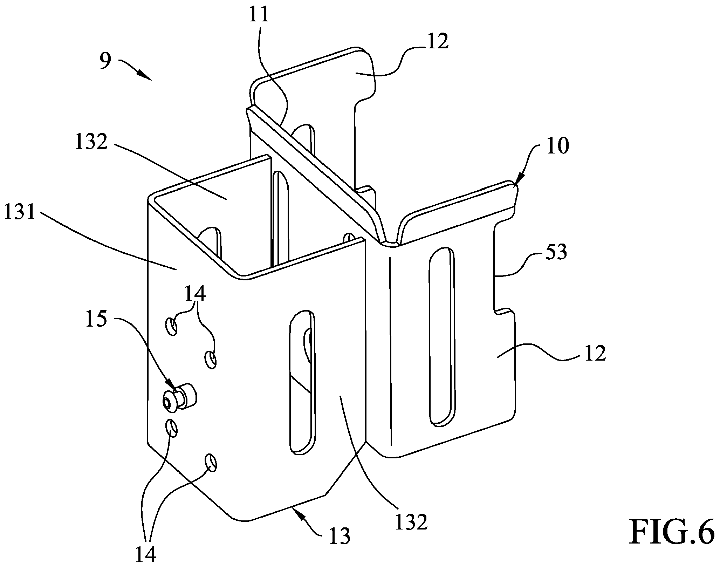

The conveying apparatus 1 comprises a plurality of retaining elements 9 removably fixed on an outer side of said at least one closed loop chain 3 so that a single package 2 of said plurality of packages 2 is retained by a retaining element 9 of said plurality of retaining elements (9). Each of said retaining elements 9 (Fig. 6) comprises a housing 10 of the package 2 and a supporting element 13 able to fix the containing block 9 to the closed loop chain 3. The housing 10 has a substantially "C"-shaped section and comprises a rear wall 11 from which two side walls 12 depart provided with recesses 53, the rear wall 11 and the side walls 12 being orientated vertically.

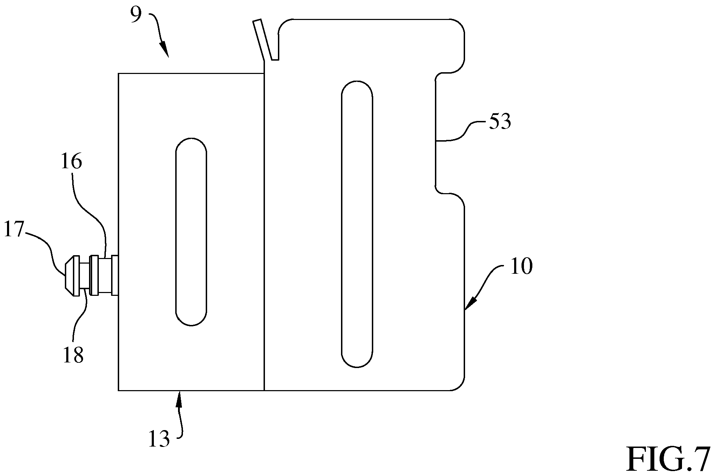

The supporting element 13 is provided with a plurality of first holes 14 on the back symmetrically arranged about a locking pin 15 (e.g. there are four first holes 14). The locking pin 15 (Fig. 7) comprises a cylindrical element 16 provided with a substantially pointed end 17, said cylindrical element 16 also comprising an intermediate profile 18 with a smaller section with respect to the cylindrical element 16.

The supporting element 13 has a "C"-shaped section and comprises a rear wall 131 parallel to the sliding direction and from which the locking pin 15 protrudes towards the chain 3, and two side walls 132 fixed to the rear wall 11 of the housing 10.

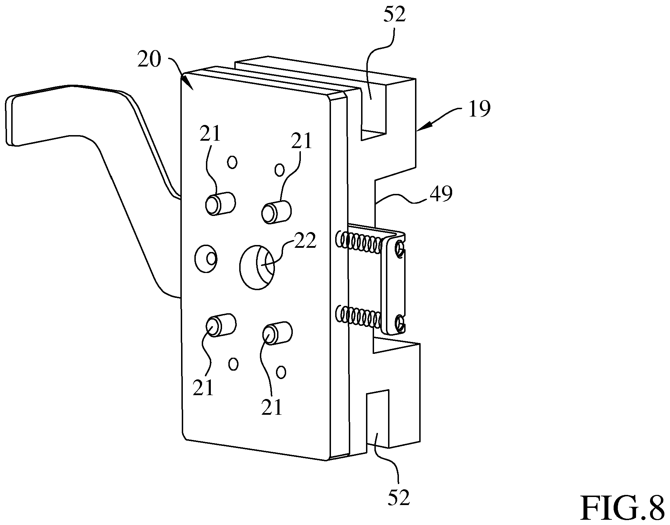

In particular, the supporting element 13 is fixed to the chain 3 by means of a runner 19 (Fig. 8) provided with attachment plate 20 which is connected to the runner 19 itself by means of a plurality of shims able to be inserted in corresponding second holes with which the runner 19 is provided. The attachment plate 20 also comprises, on one coupling side with the containing block 9, a plurality of pins 21 (e.g. four pins 21) able to be inserted in said plurality of first holes 14, with which the first supporting element 13 is provided for centering the containing block 9 on the attachment plate 20, and a central hole 22 able to allow the insertion of the locking pin 15.

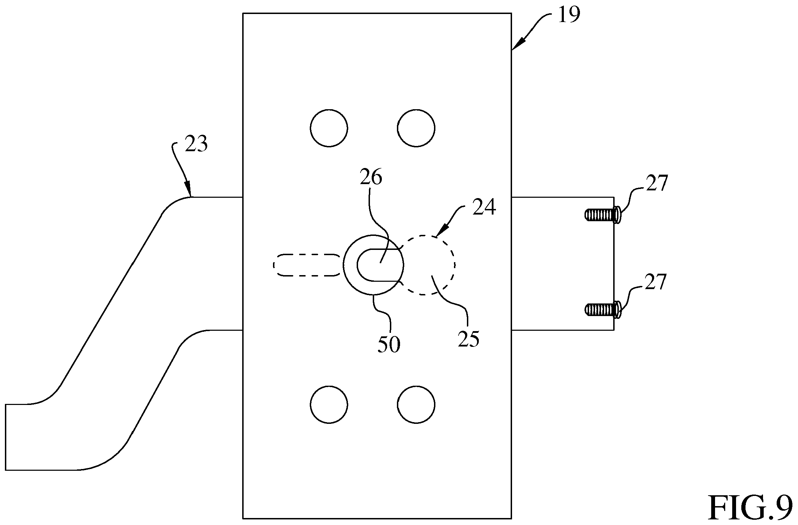

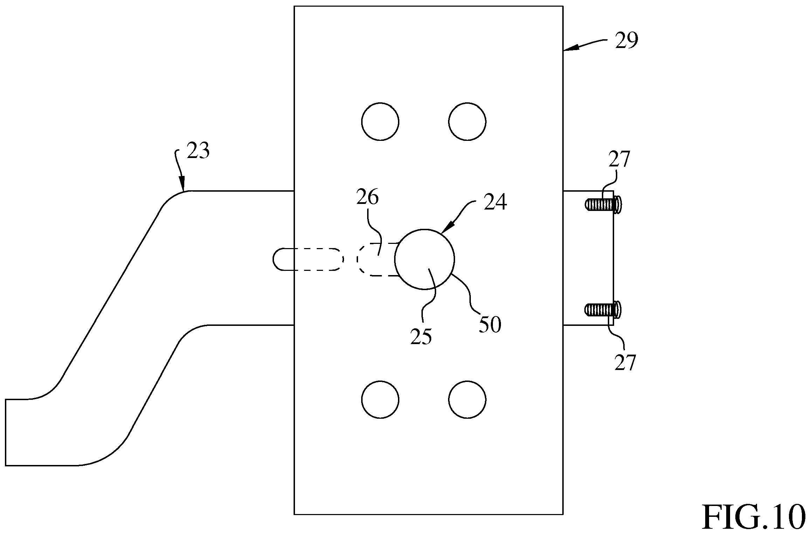

The runner 19 is substantially parallelepiped-shaped and comprises at least one rear groove 49 able to house a stretch of said at least one chain 3 and being fixed to the latter by means of an angle plate. In said preferred embodiment, in which there is a double chain 3, the housing is shaped to offer housing to both the chains and the latter are fixed by means of respective angle plates. Furthermore, the runner 19 comprises a further central hole 50 (Figs. 9, 10) able to also house said locking pin 15, as well as groove for housing in sliding manner, in transverse direction with respect to the insertion direction of the locking pin 15, a locking lever 23 interposed between the runner 19 and the attachment plate 20 (Fig. 8).

The locking lever 23 comprises at least one third hole 24 (Figs. 9, 10) with a first portion 25, of larger size, able to allow the introduction of the locking pin 15, and a second portion 26, of smaller size, able to allow the housing of the intermediate portion 18 only of the locking pin 15. The locking lever 23 is connected to a side wall of the attachment plate 20 by means of a pair of springs 27 and is shaped to move transversally with respect to the direction of insertion of the locking pin 15 between a resting position (Fig. 9), in which the second portion 26 of the third hole 24 is aligned with the locking pin 15 (and also with the further central hole 50 of the runner 19) and the springs 27 are distended, and a traction position (Fig. 10), in which the first portion 25 of the third hole 24 is aligned with the locking pin 15 and the springs 27 are compressed.

For fitting the containing block 9 to the runner 19 (and therefore to the chain 3) it is sufficient to press the containing block 9 against the attachment plate 20 of the runner 19 so that, by virtue of the insertion of the pointed end 17, the locking lever 23 is pushed transversally until the intermediate portion 18 of the locking pin 15 enters into the third hole 24 and the locking lever 23 is pushed by the springs 27 back to resting position; the intermediate portion 18 is the only one to have a section such to be able to be introduced in the second portion 26 of the third hole 24. For removing the containing block 9, instead, the locking lever 23 must be gripped, pulling it against the bias of the springs 27 so as to return the third hole 24 with the first portion 25 coinciding with the central hole 22 of the attachment plate 20, so that the containing block 9 can be extracted; once the containing block 9 has been extracted, the springs 27 will return the locking lever 23 to resting position.

By virtue of the particular shape of the containing block 9, the conveying and manufacturing of cardboard boxes which are substantially parallelepiped-shaped and which fit into the housing 10, by resting on the rear surface 11 and being contained by the two side surfaces 12, is also allowed. In order to handle cardboard boxes (but also other types of packages 2) of different size, said retaining elements 9 may fix housings of different sizes.

The conveying apparatus 1 then comprises an upper rail 28 and a lower rail 29 able to couple with complementary grooves 52 with which the runner 19 is provided; similarly to the path of the chain 3, said upper and lower rails 28, 29 replicate the path of the chain 3, comprising a pair of rectilinear portions joined to one another by means of a pair of curved portions. The upper and lower rails 28, 29 have the purpose of stabilizing the retaining elements 9 during their movement, preventing oscillation phenomenon.

Advantageously, the conveying apparatus 1 comprises a sliding base 30, which also follows the path of the chain 3 and which is therefore also shaped envisaging two mutually rectilinear portions connected to each other by two curved portions, said sliding base 30 being able to support each package in each retaining element 9 of the plurality of retaining elements 9 of the bags 2, providing a rest and facilitating the sliding on the bottom of each of said packages 2. Alternatively, each retaining element 9 of said plurality of retaining elements 9 comprise a bottom wall for supporting the package 2.

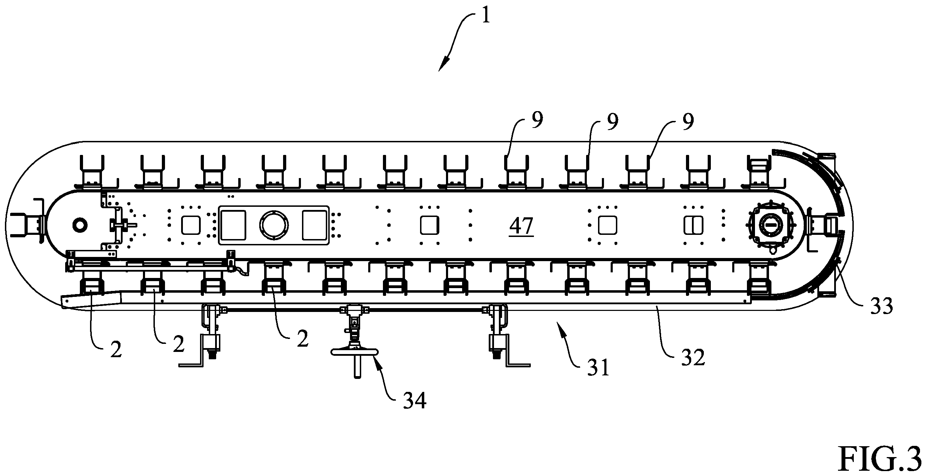

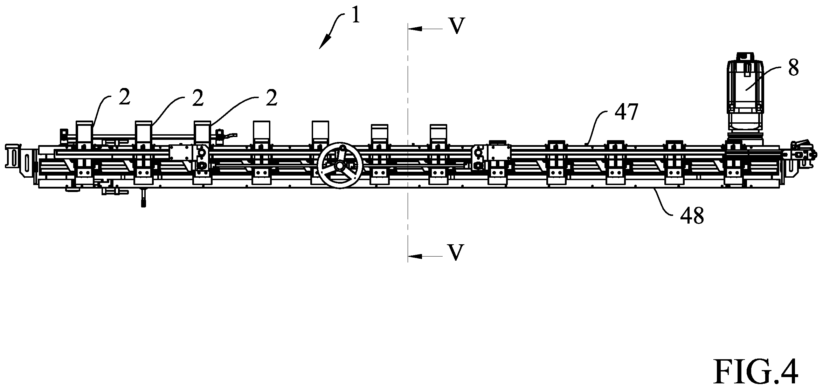

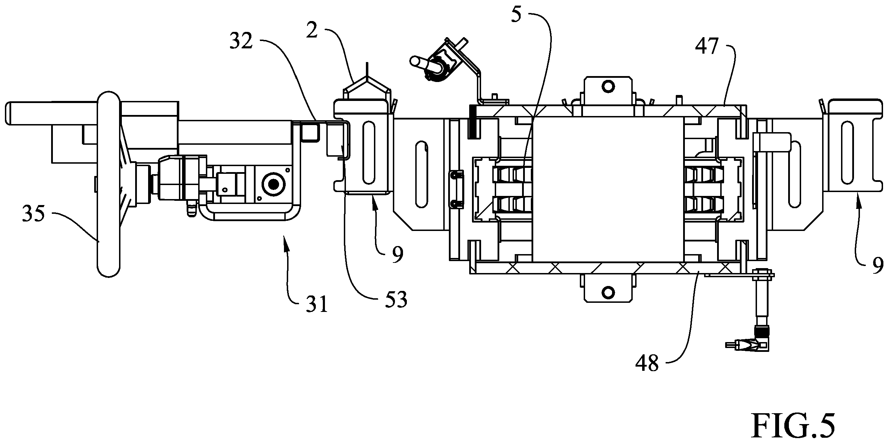

Furthermore, the conveying apparatus 1 comprises an adjustable guide 31 (Figs. 1, 3, 4) arranged so as to externally surround at least one stretch of said chain 3, said guide 31 being able to keep each package 2 inside the containing element 9 in which it is contained. In particular, the adjustable guide 31 comprises at least one rectilinear bar 32 and at least one elastically deformable curved stretch 33 which departs as extension of the rectilinear bar 32 and hinged to the latter. The rectilinear bar 32 is positioned at one of the two rectilinear positions 6 near the retaining elements 9, while said curved stretch 33 is positioned near one of the curved portions 7. Furthermore, the rectilinear bar 32 has shape and size such to be inserted inside said recesses 53 onto the side walls 10 of the retaining elements 9, although not coming into contact with them, whereby defining a closed perimeter in which one of the packages 2 is contained (Fig. 5).

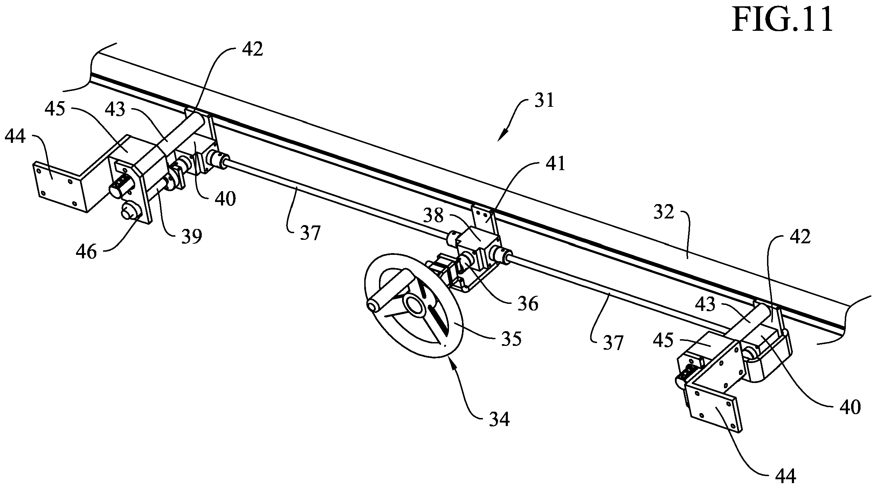

The guide 31 also comprises adjustment means 34 (Fig. 11) able to move said at least one rectilinear bar 32 so as to approach it or distance it laterally with respect to the chain 3. In this manner, the correct distance can be determined for each type of package.

In particular, the adjustment means 34 (Fig. 11) comprise a handwheel 35 able to move a Cardan shaft 36 connected to a pair of further orthogonal shafts 37 by means of a first angular transmission 38, each of said further orthogonal shafts 37 being connected to a threaded shaft 39 by means of second angular transmissions 40. The first angular transmission 38 and the second angular transmissions 40 are integral with a central supporting sheet 41 and with two side support sheets 42, respectively, said support sheets 41, 42 being fixed to the rectilinear bar 32 of the guide 31; furthermore, a respective pairs of guide shafts 43 depart orthogonally to one of the rectilinear portion 6, 7 of the chain 3 by the side support sheets 42.

Furthermore, the adjustment means 34 comprise a pair of fixing supports 44 to a frame of the packaging machine each comprising a runner 45 through which one of said guide shafts 43 runs, and a pair of lead nuts 46, each integral with one of the fixing supports 44, able to couple with one of the threaded shafts 39.

The adjustment means 34 are configured to make the guide shafts 43 slide through the runners 45, whereby approaching or distancing the rectilinear bar 32 with respect to the rectilinear stretch 6, 7 of the chain 3 by rotating the handwheel 35 and the consequent transmission of the two threaded shafts 39 which move the lead nuts 46 respectively backwards or forwards. The adjustment of the curved stretch 33 occurs instead by modifying the angle with respect to the rectilinear bar 32 and deforming the curving by means of further adjustment means 51.

Finally, the conveying apparatus 1 comprises an upper plate 47 and a lower plate 48 able to close the chain 3 inside and to offer support to said upper and lower rails 28, 29.

By virtue of the conveying apparatus, according to the present invention, each package can be stably positioned inside a containing block of the closed loop chain, allowing the packaging machine to manufacture packages of different type at the same time.

## Claims

1. Conveying apparatus (1) able to horizontally convey a plurality of packages (2) containing food, comprising a closed loop chain (3) meshing between a driving ring gear (4) and an idle ring gear (5), with their own vertical rotation axes, and a plurality of retaining elements (9) removably fixed to said chain (3), a single package (2) of said plurality of packages (2) being retained by a retaining element (9) of said plurality of retaining elements (9),
each of said retaining elements (9) comprises a "C"-shaped housing (10) for the package (2), each housing (10) comprising a rear wall (11) from which two side walls (12) depart, to which a supporting element (13) is fixed,
said supporting element (13) is separably fixed to the chain (3) by means of a runner (19) which is provided with at least one rear groove (49) able to house a stretch of said at least one chain (3)
**characterized in that**
said supporting element (13) is provided on the back with a locking pin (15) which develops orthogonally to the sliding direction of the chain (3), from the supporting element (13) toward the chain (3),
wherein an attachment plate (20) is fixed to the runner (19),
wherein a locking lever (23) is interposed between the runner (19) and the attachment plate (20), and said runner (19) comprises a groove for housing in sliding manner, in transverse direction with respect to the insertion direction of the locking pin (15), the locking lever (23) interposed between the runner (19) and the attachment plate (20),
wherein said attachment plate (20) comprises, on one coupling side with the supporting element (13), a central hole (22) able to allow the insertion of the locking pin (15),
wherein said locking pin (15) comprises a cylindrical element (16) provided with a substantially pointed end (17), which comprises an intermediate portion (18) with a smaller section with respect to that of the cylindrical element (16),
said locking lever (23) comprises at least one hole (24) with a larger size first portion (25), able to allow the introduction of the locking pin (15), and a smaller size second portion (26), able to allow the housing of the intermediate portion (18) only of the locking pin (15).

2. Apparatus (1) according to claim 1, **characterized in that** said supporting element (13) has a "C"-shaped section and comprises a rear wall (131) parallel to the sliding direction and from which the locking pin (15) protrudes towards the chain (3), and two side walls (132) fixed to the rear wall (11) of the housing (10).

3. Apparatus (1) according to claim 1, **characterized in that** the locking lever (23) is connected to a side wall of the attachment plate (20) by means of a pair of springs (27) and is configured to move transversally with respect to the direction of insertion of the locking pin (15) between a resting position, in which the second portion (26) of the hole (24) is aligned with the locking pin (15) and the springs (27) are distended, and a traction position, in which the first portion (25) of the hole (24) is aligned with the locking pin (15) and the springs (27) are compressed.

4. Apparatus (1) according to any one of the preceding claims, **characterized in that** said supporting element (13) is provided on the rear with a plurality of holes (14) arranged symmetrically about the locking pin (15), and **in that** said attachment plate (20) comprises, on one coupling side of the supporting element (13), a plurality of pins (21) able to be inserted in said plurality of holes (14).

## Patentansprüche

1. Fördervorrichtung (1), die in der Lage ist, eine Vielzahl von Verpackungen (2), die Lebensmittel enthalten, horizontal zu befördern, umfassend eine geschlossene Kette (3), die zwischen einem Antriebszahnkranz (4) und einem Leerlaufzahnkranz (5) mit ihren eigenen vertikalen Drehachsen ineinandergreift, und eine Vielzahl von Halteelementen (9), die abnehmbar an der Kette (3) befestigt sind, wobei eine einzelne Verpackung (2) der Vielzahl von Verpackungen (2) durch ein Halteelement (9) der Vielzahl von Halteelementen (9) gehalten wird, wobei
jedes der Halteelemente (9) ein "C"-förmiges Aufnahmeteil (10) für die Verpackung (2) aufweist, wobei jedes Aufnahmeteil (10) eine Rückwand (11) aufweist, von der zwei Seitenwände (12) abgehen, an denen ein Stützelement (13) befestigt ist, wobei
das Stützelement (13) mittels einer Laufschiene (19), die mit mindestens einer hinteren Nut (49) versehen ist, die einen Abschnitt der mindestens einen Kette (3) aufnehmen kann, an der Kette (3) ablösbar befestigt ist
**dadurch gekennzeichnet, dass**
das Stützelement (13) auf der Rückseite mit einem Verriegelungsstift (15) versehen ist, der orthogonal zur Gleitrichtung der Kette (3) von dem Stützelement (13) zur Kette (3) ausgebildet ist,
wobei eine Befestigungsplatte (20) an der Laufschiene (19) befestigt ist,
wobei ein Verriegelungshebel (23) zwischen der Laufschiene (19) und der Befestigungsplatte (20) angeordnet ist, und die Laufschiene (19) eine Nut zur gleitenden Aufnahme des zwischen der Laufschiene (19) und der Befestigungsplatte (20) angeordneten Verriegelungshebels (23) in Querrichtung zur Einführungsrichtung des Verriegelungsstifts (15) aufweist,
wobei die Befestigungsplatte (20) auf einer Kupplungsseite mit dem Stützelement (13) ein zentrales Loch (22) aufweist, das die Einführung des Verriegelungsstiftes (15) ermöglicht,
wobei der Verriegelungsstift (15) ein zylindrisches Element (16) aufweist, das mit einem im wesentlichen spitzen Ende (17) versehen ist, das einen Zwischenabschnitt (18) mit einem kleineren Querschnitt in Bezug auf den des zylindrischen Elements (16) aufweist, und
der Verriegelungshebel (23) mindestens ein Loch (24) mit einem ersten Abschnitt (25) größerer Größe, der die Einführung des Verriegelungsstifts (15) ermöglicht, und einem zweiten Abschnitt (26) kleinerer Größe, der die Aufnahme nur des Zwischenabschnitts (18) des Verriegelungsstifts (15) ermöglicht.

2. Vorrichtung (1) nach Anspruch 1, **dadurch gekennzeichnet, dass** das Stützelement (13) einen "C"-förmigen Querschnitt hat und eine parallel zur Gleitrichtung verlaufende Rückwand (131), aus der der Verriegelungsstift (15) zur Kette (3) hin vorsteht, sowie zwei an der Rückwand (11) des Aufnahmeteils (10) befestigte Seitenwände (132) aufweist.

3. Vorrichtung (1) nach Anspruch 1, **dadurch gekennzeichnet, dass** der Verriegelungshebel (23) mittels eines Federpaares (27) mit einer Seitenwand der Befestigungsplatte (20) verbunden ist und so konfiguriert ist, dass er sich quer zur Einführungsrichtung des Verriegelungsstiftes (15) zwischen einer Ruheposition bewegt, in welcher der zweite Teil (26) des Lochs (24) mit dem Verriegelungsstift (15) ausgerichtet ist und die Federn (27) aufgeweitet sind, und eine Zugposition, in der der erste Teil (25) des Lochs (24) mit dem Verriegelungsstift (15) ausgerichtet ist und die Federn (27) zusammengedrückt sind.

4. Vorrichtung (1) nach einem der vorstehenden Ansprüche, **dadurch gekennzeichnet, dass** das Stützelement (13) auf der Rückseite mit einer Vielzahl von symmetrisch um den Verriegelungsstift (15) angeordneten Löchern (14) versehen ist, und dass die Befestigungsplatte (20) auf einer Kupplungsseite des Stützelements (13) eine Vielzahl von Stiften (21) umfasst, die in die Vielzahl von Löchern (14) eingeführt werden können.

## Revendications

1. Dispositif de convoyage (1) pouvant convoyer de manière horizontale une pluralité de paquets (2) contenant un aliment, comprenant une chaîne à boucle fermée (3) s'engrenant entre une couronne dentée d'entraînement (4) et une couronne dentée libre (5), avec leurs propres axes de rotation verticaux, et une pluralité d'éléments de retenue (9) fixés de manière amovible à ladite chaîne (3), un seul paquet (2) de ladite pluralité de paquets (2) étant retenu par un élément de retenue (9) de ladite pluralité d'éléments de retenue (9),
chacun desdits éléments de retenue (9) comprend un logement en forme de « C » (10) pour le paquet (2), chaque logement (10) comprenant une paroi arrière (11) à partir de laquelle partent deux parois latérales (12), à laquelle est fixé un élément de support (13),
ledit élément de support (13) est fixé de manière séparée à la chaîne (3) au moyen d'une glissière (19) qui est pourvue d'au moins une rainure arrière (49) pouvant recevoir une tension de ladite au moins une chaîne (3),
**caractérisé en ce que**
ledit élément de support (13) est pourvu à l'arrière d'une broche de verrouillage (15) qui se développe de manière orthogonale à la direction de coulissement de la chaîne (3), de l'élément de support (13) vers la chaîne (3),
dans lequel une plaque de fixation (20) est fixée à la glissière (19),
dans lequel un levier de verrouillage (23) est interposé entre la glissière (19) et la plaque de fixation (20), et ladite glissière (19) comprend une rainure pour recevoir, de manière coulissante, dans une direction transversale par rapport à la direction d'insertion de la broche de verrouillage (15), le levier de verrouillage (23) interposé entre la glissière (19) et la plaque de fixation (20),
dans lequel ladite plaque de fixation (20) comprend, sur un côté de couplage avec l'élément de support (13), un trou central (22) pouvant permettre l'insertion de la broche de verrouillage (15),
dans lequel ladite broche de verrouillage (15) comprend un élément cylindrique (16) pourvu d'une extrémité essentiellement pointue (17), qui comprend une partie intermédiaire (18) avec une section plus petite par rapport à celle de l'élément cylindrique (16),
ledit levier de verrouillage (23) comprend au moins un trou (24) avec une première partie de taille plus grande (25), pouvant permettre l'introduction de la broche de verrouillage (15), et une seconde partie de taille plus petite (26), pouvant permettre la réception uniquement de la partie intermédiaire (18) de la broche de verrouillage (15) .

2. Dispositif (1) selon la revendication 1, **caractérisé en ce que** ledit élément de support (13) a une section en forme de « C » et comprend une paroi arrière (131) parallèle à la direction de coulissement et à partir de laquelle la broche de verrouillage (15) fait saillie vers la chaîne (3), et deux parois latérales (132) fixées à la paroi arrière (11) du logement (10).

3. Dispositif (1) selon la revendication 1, **caractérisé en ce que** le levier de verrouillage (23) est relié à une paroi latérale de la plaque de fixation (20) au moyen d'une paire de ressorts (27) et est configuré pour se déplacer de manière transversale par rapport à la direction d'insertion de la broche de verrouillage (15) entre une position au repos, dans laquelle la seconde partie (26) du trou (24) est alignée à la broche de verrouillage (15) et les ressorts (27) sont distendus, et une position de traction, dans laquelle la première partie (25) du trou (24) est alignée à la broche de verrouillage (15) et les ressorts (27) sont comprimés.

4. Dispositif (1) selon l'une quelconque des revendications précédentes, **caractérisé en ce que** ledit élément de support (13) est pourvu à l'arrière d'une pluralité de trous (14) agencés de manière symétrique autour de la broche de verrouillage (15), et **en ce que** ladite plaque de fixation (20) comprend, sur un côté de couplage de l'élément de support (13), une pluralité de broches (21) pouvant être insérées dans ladite pluralité de trous (14).
